# FASCICULE DE BREVET EUROPEEN

(11) **EP 2 805 116 B1**
(45) Date de publication et mention de la délivrance du brevet: **29.08.2018**
(21) Numéro de dépôt: 13700237.4
(22) Date de dépôt: 15.01.2013
(51) Int. Cl.: F24F 5/00

(54) **SYSTÈME DE REFROIDISSEMENT POUR BÂTIMENT A BASSE CONSOMMATION D'ÉNERGIE**
KÜHLUNGSSYSTEM FÜR GEBÄUDE MIT NIEDRIGEM ENERGIEBEDARF
COOLING SYSTEM FOR LOW ENERGIE BUILDING

(30) Priorité: 16.01.2012 FR 1250390
(43) Date de publication de la demande: 26.11.2014
(73) Titulaire: Commissariat à l'Énergie Atomique et aux Énergies Alternatives, 75015 Paris (FR)
(72) Inventeur: STEPHAN, Louis, F-73000 Chambery (FR)
(74) Mandataire: Brevalex
(86) Numéro de dépôt international: PCT/EP2013/050674
(87) Numéro de publication internationale: WO 2013/107741

(56) Documents cités:
- EP-A2- 0 041 658
- EP-A2- 1 505 355
- DE-A1- 3 021 464
- FR-A1- 2 697 324
- US-A- 4 517 958
- US-A1- 2011 151 182

## Description

### DOMAINE TECHNIQUE ET ART ANTERIEUR

La présente invention se rapporte à un système de refroidissement amélioré pour bâtiment à basse consommation d'énergie.

Lors de la conception et de la construction des bâtiments à usage d'habitation ou usage professionnel, on cherche à réduire leur consommation d'énergie nécessaire à leur chauffage et à leur refroidissement. Pour cela, on améliore l'isolation thermique par rapport à l'extérieur pour limiter les pertes de chaleur vers l'extérieur en hiver et limiter la pénétration de la chaleur vers l'intérieur en été.

Concernant le refroidissement du bâtiment, on utilise des systèmes d'air conditionné. Les systèmes d'air conditionné actuels sont pour la plupart des systèmes mécaniques très consommateurs d'électricité, on cherche donc à les remplacer par des systèmes beaucoup plus économiques désignés « systèmes de refroidissement passifs ».

Ces systèmes de refroidissement passifs utilisent différents mécanismes d'échange thermique, le refroidissement par évaporation, le refroidissement radiatif et le refroidissement convectif.

Le refroidissement par évaporation consiste par exemple à refroidir l'air par contact avec de l'eau qui s'évapore. Le refroidissement radiatif utilise le ciel comme échangeur de chaleur dont la température est généralement plus basse la nuit que celle des bâtiments. Enfin, les systèmes par refroidissement convectif utilisent l'air frais par exemple disponible soit la nuit soit en sous-sol par l'intermédiaire d'échangeurs thermiques.

Il existe plusieurs systèmes qui sont encore à l'état de prototype, ceux-ci assurant le refroidissement d'un bâtiment en récupérant l'eau de pluie et en la faisant circuler dans le bâtiment.

Un premier exemple de tels systèmes utilise un réservoir pour collecter l'eau de pluie, cette eau de pluie est alors mise en circulation dans un circuit fermé à l'intérieur du bâtiment par exemple dans les plafonds pour refroidir l'air à l'intérieur du bâtiment. L'eau circule du réservoir à l'intérieur du bâtiment, puis est renvoyée dans le réservoir. La circulation d'eau est entretenue tant qu'un refroidissement est requis. L'eau, au fur et à mesure qu'elle circule dans le bâtiment, est échauffée, elle doit donc être refroidie pour maintenir sa température suffisamment basse afin d'assurer le refroidissement de l'air du bâtiment pendant la journée. Pour cela, un circuit entre le réservoir de stockage et le toit est prévu, l'eau est mise en circulation dans le toit pendant la nuit et est refroidie par effet radiatif et convectif.

Ce système de refroidissement est très efficace, cependant il n'utilise pas le refroidissement par évaporation, puisque le système est fermé.

Il existe un autre dispositif de refroidissement utilisant l'eau de pluie qui est stockée dans un réservoir. Celle-ci est mise en circulation à l'intérieur du bâtiment. L'eau est également refroidie la nuit, cependant ce système se distingue du système précédemment décrit en ce que le refroidissement de l'eau se fait par pulvérisation de l'eau à la surface du toit, celle-ci est alors refroidie à la fois par des échanges radiatifs, convectifs et par évaporation. L'eau est ensuite récupérée par les gouttières et renvoyée dans le réservoir de stockage.

Ces deux dispositifs ont notamment comme inconvénient de nécessiter une maintenance importante dont le coût est élevé. Dans le cas du système dans lequel l'eau est pulvérisée à la surface du toit, le toit doit être gardé propre et les pulvérisateurs doivent être nettoyés régulièrement. Par ailleurs, la quantité d'énergie de refroidissement potentiellement récupérable dans ces systèmes est directement reliée à la surface de toit disponible pour le bâtiment, ce qui implique que ce type de dispositif est relativement performant pour des maisons comportant un étage par exemple mais l'est beaucoup moins pour des immeubles pour lesquels la surface de toit est très faible par rapport au nombre d'étages et au volume à refroidir.

En outre, ces dispositifs nécessitent une circulation d'eau pendant la nuit et une circulation d'eau pendant le jour à l'intérieur du bâtiment au moyen d'une pompe, ce qui implique une consommation électrique importante. En outre, le fonctionnement de la pompe pendant la nuit peut être une nuisance sonore et sa durée de vie est réduite.

Le document EP0041658 décrit un dispositif de climatisation pour habitation selon le préambule de la revendication 1.

### EXPOSÉ DE L'INVENTION

C'est par conséquent un but de la présente invention d'offrir un système de refroidissement passif pour un bâtiment présentant une grande efficacité de refroidissement dont les coûts de maintenance sont réduits, qui soit à la fois adapté pour des maisons et des immeubles.

Le but précédemment énoncé est atteint par un système de refroidissement comportant au moins un premier réservoir, au moins un deuxième réservoir, au moins un échangeur thermique disposé à l'intérieur du bâtiment et entre le premier et le deuxième réservoir. Le premier réservoir, le deuxième réservoir et l'échangeur thermique sont connectés en série et une pompe est disposée entre le premier réservoir et l'échangeur thermique de sorte à assurer la circulation d'un liquide de refroidissement du premier réservoir vers le deuxième réservoir via l'échangeur thermique et un moyen d'interruption de l'écoulement à l'intérieur du circuit disposé en aval du deuxième réservoir afin d'assurer le remplissage du deuxième réservoir par le premier réservoir lors du fonctionnement de la pompe. Le deuxième réservoir présente une partie poreuse de sorte à assurer également un refroidissement par évaporation du liquide de refroidissement.

Le deuxième réservoir est destiné à être disposé à l'extérieur du bâtiment et assure le refroidissement du liquide de refroidissement pendant la nuit au moins par radiation et par convection.

De manière préférentielle, le deuxième réservoir est disposé sur une façade du bâtiment non soumise au rayonnement solaire afin d'éviter un échauffement du liquide de refroidissement pendant la journée.

Lorsque le liquide de refroidissement a été suffisamment refroidi pendant la nuit, celui-ci est renvoyé vers le premier réservoir par gravité.

De manière avantageuse, le deuxième réservoir est situé à une altitude supérieure à celle du premier réservoir de sorte que, lorsque l'écoulement entre le deuxième et le premier réservoir est autorisé, celui-ci se fasse par gravité sans nécessiter de pompe. Ainsi la consommation d'énergie est réduite et les nuisances sonores liées au fonctionnement d'une pompe sont éliminées.

De plus, la pompe ne sert qu'à la circulation du liquide pendant la journée, sa durée de vie est donc augmentée.

En d'autres termes, le système de refroidissement assure pendant la journée la circulation du liquide de refroidissement entre le premier et le deuxième réservoir à travers l'échangeur thermique et, c'est uniquement après que le liquide de refroidissement a été refroidi dans le deuxième réservoir que celui-ci retourne dans le premier réservoir.

Ce système ne requiert qu'une maintenance réduite puisqu'il ne nécessite pas de nettoyage du toit, ni des filtres, le réservoir poreux ne nécessitant pas, quant à lui, d'entretien particulier.

La présente invention a alors pour objet un système de refroidissement pour bâtiment mettant en oeuvre la circulation d'un liquide de refroidissement dans un circuit hydraulique, comportant au moins un premier réservoir, au moins un deuxième réservoir comportant au moins une partie d'une de ses parois en matériau poreux et au moins un échangeur thermique connectés en série par un circuit hydraulique, au moins une pompe hydraulique disposée entre le premier réservoir et l'échangeur thermique, le deuxième réservoir étant destiné à être situé à l'extérieur du bâtiment. Le système comporte des moyens de contrôle de la circulation du liquide du deuxième réservoir vers le premier réservoir, et lors du fonctionnement du système pour refroidir l'intérieur du bâtiment, l'écoulement du deuxième réservoir vers le premier réservoir est interrompu et la pompe hydraulique fait circuler le liquide du premier réservoir vers le deuxième réservoir à travers l'échangeur thermique, de sorte que le deuxième réservoir se remplisse.

Le matériau poreux présente avantageusement une porosité comprise entre 10% et 35%.

Par exemple, le matériau poreux est une terre cuite ou céramique poreuse.

Le deuxième réservoir comporte de manière très avantageuse au moins une face extérieure structurée de sorte à présenter une grande surface d'échange thermique.

La face extérieure structurée est de préférence une face de la partie poreuse.

Le deuxième réservoir est de préférence destiné à être fixé sur une façade extérieure du bâtiment.

Le deuxième réservoir peut comporter une deuxième paroi parallèle à la première paroi, ladite deuxième paroi étant étanche au liquide, par exemple en acier galvanisé ou plastique.

De préférence, le système de refroidissement comporte des moyens de court-circuit hydraulique du deuxième réservoir de sorte à assurer l'évacuation du liquide provenant de l'échangeur thermique vers le premier réservoir lorsque le deuxième réservoir est rempli entièrement.

Le premier réservoir peut être destiné à être enterré, par exemple disposé dans un vide sanitaire.

Le premier réservoir comporte avantageusement une face supérieure au moins partiellement ouverte pour assurer un échange thermique par évaporation entre le liquide qu'il contient et l'environnement extérieur.

Le système peut comporter au moins deux deuxièmes réservoirs, les deux deuxièmes réservoirs étant interconnectés.

La présente invention a également pour objet un bâtiment comportant un ou plusieurs niveaux et un système de refroidissement selon la présente invention, le deuxième réservoir étant fixé sur une façade extérieure.

Ladite façade extérieure est de préférence une façade non exposée aux rayons solaires.

Le premier réservoir comporte une face supérieure ouverte dont la surface est avantageusement supérieure à 5% de la surface au sol du bâtiment.

Le bâtiment peut comporter un échangeur de chaleur à chaque niveau.

De manière avantageuse, le deuxième réservoir est situé à une altitude supérieure à celle du premier réservoir de sorte que l'écoulement du deuxième réservoir vers le premier réservoir s'effectue par gravité.

La présente invention a également pour objet un procédé de refroidissement d'un bâtiment mettant en oeuvre la circulation d'un liquide de refroidissement dans un circuit hydraulique, comportant au moins un premier réservoir, au moins un deuxième réservoir et au moins un échangeur thermique connectés en série par un circuit hydraulique, au moins une pompe hydraulique disposée entre le premier réservoir et l'échangeur thermique, dans lequel le deuxième réservoir est destiné à être situé à l'extérieur du bâtiment, dans lequel le système comporte des moyens de contrôle de la circulation du liquide du deuxième réservoir vers le premier réservoir, ledit procédé comportant les étapes :
a) interruption de l'écoulement du liquide de refroidissement du deuxième réservoir vers le premier réservoir,
b) mise en route de la pompe hydraulique assurant la circulation du liquide de refroidissement à travers l'échangeur thermique du premier réservoir dans le deuxième réservoir tant que l'intérieur du bâtiment doit être refroidi,
c) arrêt de la pompe hydraulique,
d) autorisation de l'écoulement du liquide de refroidissement du deuxième réservoir vers le premier réservoir.

L'étape d) a lieu de préférence lorsque que la température du liquide de refroidissement est inférieure ou égale à un seuil donné et au plus tard en fin de nuit.

### BRÈVE DESCRIPTION DES DESSINS

La présente invention sera mieux comprise à l'aide de la description qui va suivre et des dessins en annexe sur lesquelles :
- la figure 1 est une représentation schématique d'un exemple de réalisation d'un système de refroidissement selon la présente invention appliqué à un bâtiment à un étage,
- la figure 2 est une vue en perspective schématique d'un exemple de réalisation d'un deuxième réservoir mis en oeuvre dans le système de refroidissement de la figure 1,
- la figure 3 est une vue de face schématique d'un exemple de réalisation du premier réservoir pouvant être mis en oeuvre dans le système de refroidissement de la figure 1.

### EXPOSÉ DÉTAILLÉ DE MODES DE RÉALISATION PARTICULIERS

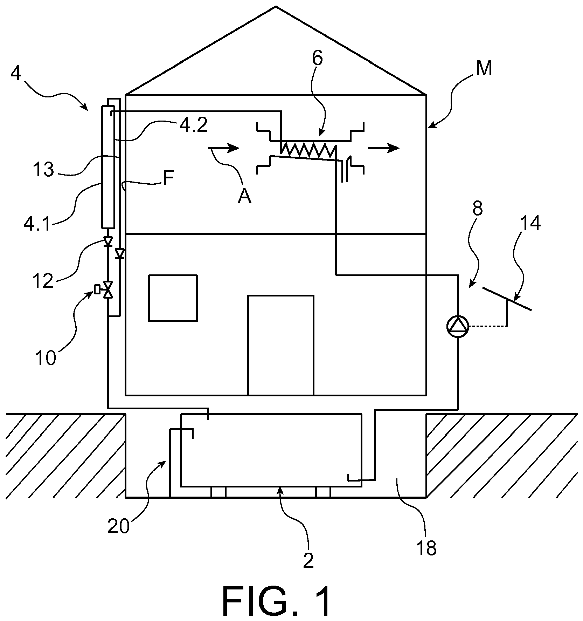

Sur la figure 1, on peut voir une représentation schématique d'un bâtiment M équipé d'un système de refroidissement selon un exemple de réalisation de la présente invention.

Le bâtiment auquel le système de refroidissement selon l'invention est appliqué est un bâtiment à un étage du type maison individuelle, c'est-à-dire une maison à deux niveaux, mais il est à noter que le système de refroidissement selon l'invention peut être appliqué à tout type de bâtiment, par exemple à des immeubles présentant plusieurs étages.

Le système de refroidissement comporte un premier réservoir 2 de préférence enterré, un deuxième réservoir 4 disposé à l'extérieur du bâtiment, un échangeur thermique 6 destiné à refroidir l'air à l'intérieur du bâtiment et une pompe hydraulique 8 disposée entre le premier réservoir 2 et l'échangeur thermique 6.

Le premier réservoir 2, la pompe hydraulique 8, l'échangeur thermique 6 et le deuxième réservoir 4 sont connectés en série par un circuit destiné à assurer la circulation d'un liquide de refroidissement.

En outre, le circuit comporte des moyens 10 pour interrompre la circulation du liquide du deuxième réservoir 4 vers le premier réservoir 2. Ces moyens 10 sont formés par exemple par une électrovanne qui est commandée par une unité centrale. Des moyens à commande manuel pourraient être utilisés pour interrompre la circulation du liquide du deuxième réservoir vers le premier réservoir 4.

De manière avantageuse, un clapet anti-retour 12 est prévu en aval du deuxième réservoir 4. Egalement de manière avantageuse, un court circuit 13 est prévu entre le deuxième réservoir 4 et une partie du circuit en aval de l'électrovanne 10 en cas de trop-plein du deuxième réservoir 4, comme cela sera expliqué ci-dessous.

Comme cela est représenté sur la figure 1 et de manière avantageuse, la pompe hydraulique 8 est alimentée au moyen d'au moins un panneau photovoltaïque 14. Comme nous le verrons lors de la description du fonctionnement du système de refroidissement, cette pompe 8 est uniquement destinée à fonctionner pendant la journée et donc lors des périodes d'ensoleillement. Grâce au panneau photovoltaïque, le fonctionnement de la pompe peut être autonome.

Dans l'exemple représenté, le deuxième réservoir 4 est fixé sur une façade F du bâtiment M.

Dans l'exemple représenté et de manière avantageuse, le deuxième réservoir 4 est disposé à une altitude supérieure à celle du premier réservoir 2, ce qui permet un écoulement par gravité du deuxième réservoir 4 vers le premier réservoir 2, évitant le recours à une pompe supplémentaire. Le coût de l'installation en est réduit et sa consommation électrique également. Cependant un système de refroidissement comportant une pompe pour renvoyer le liquide du deuxième réservoir 4 au premier réservoir 2 ne sort pas du cadre de la présente invention.

De manière très avantageuse, le deuxième réservoir 4 est fixé sur une façade non exposée au rayonnement solaire. Dans le cas d'un bâtiment situé dans l'hémisphère Nord, il s'agit de la façade située au Nord et dans le cas d'un bâtiment situé dans l'hémisphère Sud, il s'agit d'une façade orientée au Sud. Outre le fait que le deuxième réservoir n'est pas soumis au rayonnement solaire et l'eau qu'il contient n'est pas échauffé, on utilise une façade comportant généralement peu d'ouvertures. Le système n'est donc pas gênant pour les habitants.

Cependant, la présente invention ne se limite pas à une mise en place de réservoir sur une façade Nord ou Sud en fonction de l'hémisphère, mais s'applique de préférence à toute façade qui ne serait pas soumise à un rayonnement solaire.

De manière préférentielle, le deuxième réservoir 4 présente une grande surface d'échange thermique. Par exemple et comme cela est représenté, il peut avoir la forme d'un parallélépipède rectangle de grande longueur et de grande largeur et de faible épaisseur, ce qui facilite son intégration sur une façade. Le deuxième réservoir représenté comporte une première paroi 4.1 de plus grande surface orientée vers l'extérieur et une deuxième paroi 4.2 de plus grande surface parallèle à la première paroi 4.1 en regard de la façade.

En outre, le deuxième réservoir 4 comporte une paroi au moins en partie en matériau poreux assurant ainsi un échange thermique par évaporation. Dans l'exemple représenté et de manière avantageuse, la première paroi 4.1 est entièrement poreuse orientée vers l'extérieur du bâtiment. On peut envisager qu'une partie seulement de la paroi soit poreuse.

Par exemple, cette première paroi 4.1 peut être réalisée en terre cuite par moulage ou par coulage. Dans le cas d'une réalisation par coulage, on ajoute au mélange pâte et eau un défloculant pour former un liquide qui sera coulé dans le moule ondulé. Dans un autre exemple de réalisation, la face poreuse est réalisée en une céramique poreuse, par exemple en briques de construction, en céramiques poreuses à base de silice ou d'alumine....

De manière préférentielle, le taux de porosité du matériau poreux du deuxième réservoir est compris entre 10% et 35%.

De préférence, la seconde paroi 4.2 du deuxième réservoir en regard de la façade du bâtiment est réalisée en matériau étanche par exemple en tôle galvanisée ou en plastique évitant ainsi de générer une humidité du côté de la façade de la maison.

De plus et de manière particulièrement préférée, la surface extérieure du deuxième réservoir est au moins en partie structurée de sorte à augmenter sa surface d'échange thermique avec l'environnement extérieur. Dans l'exemple représenté, la surface de la première paroi poreuse 4.1 comporte des ondulations 16 sur toute sa hauteur. A titre d'exemple dans le cas d'une plaque plane d'une surface de 1 m² la réalisation de telles ondulations d'un diamètre égal à 5 cm a pour effet d'offrir une surface d'échange thermique équivalente de 1,57 m². On peut prévoir de structurer également la face extérieure de la deuxième paroi 4.1 et/ou les faces des parois latérales. Toute autre forme de structuration augmentant la surface d'échange thermique est envisageable.

Concernant le premier réservoir, celui-ci est de préférence enterré afin de limiter les variations de température de l'environnement qui l'entoure et donc de pouvoir limiter l'échauffement naturel du liquide de refroidissement qu'il contient. Dans l'exemple représenté, celui-ci est disposé dans le vide sanitaire 18 de la maison, ce qui réduit l'encombrement. Cependant il pourrait être disposé à l'extérieur de la maison, par exemple dans le jardin.

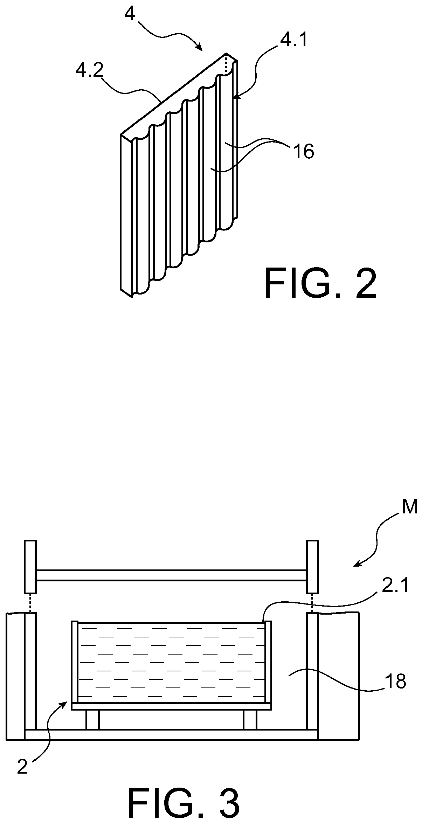

Le premier réservoir 2 peut être fermé ou comme cela est représenté sur la figure 1 et sur la figure 3, celui-ci peut comporter une surface supérieure 2.1 ouverte assurant un échange thermique par évaporation favorisant encore le refroidissement du liquide de refroidissement qu'il contient. Le choix entre un premier réservoir fermé et un premier réservoir ouvert dépend en partie des conditions climatiques du lieu où le bâtiment est installé. Si la température descend suffisamment bas la nuit par exemple, un premier réservoir fermé pourra suffire, le refroidissement par évaporation n'étant pas requis. Des contraintes extérieures, telles que le manque de place par exemple... pourront également orienter le choix vers un premier réservoir fermé.

Le liquide de refroidissement est de préférence l'eau, de manière encore privilégiée de l'eau de pluie qui a été collectée préalablement par l'intermédiaire par exemple des gouttières bordant le toit du bâtiment.

De manière avantageuse, on prévoit une alimentation supplémentaire 20 par le réseau urbain d'eau du premier réservoir afin de pouvoir compléter le niveau du premier réservoir lorsque cela est nécessaire. Effectivement, le système de refroidissement étant destiné à fonctionner l'été à une période où le niveau de précipitation est réduit, et le dispositif fonctionnant de manière partiellement ouverte, le niveau d'eau dans le premier réservoir baisse. De préférence, le premier réservoir est équipé d'un détecteur de niveau. Avantageusement ce détecteur est relié à une vanne de connexion au réseau d'eau, la vanne étant ouverte automatiquement lorsqu'une baisse de niveau d'eau est détectée.

S'il est possible de récupérer de l'eau de pluie, le niveau sera complété à partir de cette eau de pluie mais si aucune chute de pluie n'a lieu, le niveau d'eau du premier réservoir est complété à partir du réseau urbain d'eau.

En outre, on prévoit de préférence un dispositif de trop-plein ou de dérivation en cas de fortes précipitations.

Nous allons maintenant expliquer le fonctionnement du système de refroidissement selon la présente invention.

Nous considérons un état initial qui correspond généralement à l'état du système de refroidissement le matin, dans lequel le premier réservoir 2 est rempli de liquide de refroidissement, et le deuxième réservoir 4 est vide suite à la vidange du matin, comme nous l'expliquerons par la suite.

Dans la description du fonctionnement que nous allons faire, nous considérons également que le deuxième réservoir 4 comporte une paroi poreuse 4.1 assurant un échange par évaporation. En outre, l'électrovanne 10 est fermée.

Lorsqu'une nécessité de refroidissement de l'intérieur du bâtiment est détectée, la pompe hydraulique 8 est mise en route, l'eau contenue dans le premier réservoir 2 est aspirée en direction de l'échangeur thermique 6. L'air, symbolisé par la flèche A, qui circule à travers l'échangeur thermique 6 est donc refroidi par l'eau circulant à travers l'échangeur thermique. L'eau sortant de l'échangeur thermique 6 est envoyée dans le deuxième réservoir 4. Puisque l'électrovanne 10 en sortie du deuxième réservoir 4 est fermée, l'eau s'accumule dans le deuxième réservoir 4 qui se remplit. Cette circulation de liquide du premier réservoir 2 vers le deuxième réservoir 4 à travers l'échangeur thermique 6 se poursuit aussi longtemps qu'une nécessitée de refroidissement est requise.

S'il advenait que le deuxième réservoir soit plein alors que la pompe continue à fonctionner et donc à faire circuler du liquide vers le deuxième réservoir, le système de trop-plein permettrait d'évacuer directement l'eau provenant du premier réservoir 2 vers une portion aval de l'électrovanne 10, cette eau serait donc directement renvoyée vers le premier réservoir.

En fin de journée, lorsque la température extérieure baisse et qu'un refroidissement de l'intérieur du bâtiment n'est plus requis, la pompe hydraulique 8 est arrêtée, interrompant ainsi la circulation d'eau entre le premier réservoir 2 et le deuxième réservoir 4 à travers l'échangeur thermique 6.

Pendant la nuit, l'eau contenue dans le deuxième réservoir 4 qui est situé à l'extérieur du bâtiment va échanger les calories avec l'environnement extérieur. Ce refroidissement s'effectue à la fois par convection, par radiation et par évaporation à travers la paroi poreuse 4.1 du deuxième réservoir 4, ce qui permet un refroidissement efficace.

Lorsque la température de l'eau contenue dans le deuxième réservoir 4 est suffisamment basse, l'électrovanne 10 est ouverte et le deuxième réservoir 4 est vidangé par gravité remplissant le premier réservoir 2. Si une nécessité de compléter le niveau du premier réservoir est détectée, une alimentation de celui-ci a lieu. La vidange peut avoir lieu la nuit dés que la température est suffisamment basse ou au matin, afin de remettre l'installation prêt à fonctionner.

On peut par exemple prévoir un système de mesure de la température de l'eau contenue dans le deuxième réservoir et ne commander la vidange du deuxième réservoir que lorsque la température est inférieure ou égale à uns seuil donné. En variante, on peut prévoir que la vidange ait lieu à heure fixe, en supposant que l'eau é été suffisamment refroidie.

Le système selon la présente invention présente l'avantage de requérir un fonctionnement de la pompe uniquement pendant la journée, puisque le retour de l'eau du deuxième réservoir vers le premier réservoir a lieu par gravité. Il en résulte une consommation électrique réduite et une augmentation de la durée de vie de la pompe.

En outre, le système de refroidissement met en oeuvre les trois phénomènes physiques d'échange thermique, le refroidissement par convection, par évaporation et par radiation, ce qui offre un refroidissement particulièrement efficace.

Par ailleurs, ce système ne nécessite pas d'entretien particulier contrairement aux systèmes de l'état de la technique qui requièrent un nettoyage régulier des filtres et/ou des systèmes de pulvérisation.

De plus, sa capacité de refroidissement est indépendante de la surface de la toiture du bâtiment, ce qui le rend applicable à la fois aux maisons individuelles et aux immeubles comportant plusieurs étages. En effet, sa capacité de refroidissement est relié à la surface de l'une de ses façades qui est alors proportionnelle au nombre de niveaux.

Enfin, son installation est peu gênante, puisque le deuxième réservoir est de préférence disposé sur une façade qui est généralement pourvue de peu d'ouvertures.

Concernant l'échangeur thermique, il peut s'agir d'un échangeur thermique refroidissant directement l'air à l'intérieur d'une pièce ou un échangeur disposé avantageusement dans le plafond ou à défaut dans le plancher de l'habitation notamment si celui-ci est déjà utilisé pour le chauffage.

Il sera compris que le système peut comporter plus d'un deuxième réservoir en fonction du volume d'eau qui est mis en circulation entre le premier réservoir et le deuxième réservoir ou les deuxièmes réservoirs, dans le cas où le système comporterait plusieurs deuxièmes réservoirs, ceux-ci seraient par exemple répartis sur la façade du bâtiment.

Il sera compris que les deuxièmes réservoirs pourraient être disposés ailleurs que sur la façade de la maison si cela se révélait nécessaire.

De manière très avantageuse, ce système de refroidissement peut être commandé de manière entièrement automatique sans intervention humaine hormis le choix de la température intérieure du bâtiment. En effet, le premier réservoir est alimenté par l'eau de pluie, et son niveau est complété par le réseau d'eau. La mise en route de la pompe est commandée par l'unité centrale en fonction de la température requise dans l'habitation. La commande de l'électrovanne peut être gérée en fonction de la température dans le deuxième réservoir.

Nous allons maintenant donner un exemple de réalisation du système de refroidissement selon la présente invention.

Pour cela, on considère une maison basse consommation à un étage (deux niveaux), chacun des niveaux ayant une surface rectangulaire de 50 m². Cette maison est occupée par trois personnes.

Le système de refroidissement adapté au refroidissement de cette maison comporte alors deux deuxièmes réservoirs 4 qui sont interconnectés. Ceux-ci comportent chacune une face ondulée dont les ondulations ont une amplitude de 20 cm et une distance crête à crête identique résultant en un secteur de forme de 1.

L'épaisseur totale de chacun des deuxièmes réservoirs de 28 cm, une longueur de 2,5 m et une hauteur de 2,8 m. Chaque deuxième réservoir 4 a alors une surface de 7 m² couvrant 11% de la surface totale de la façade nord.

Le premier réservoir est disposé dans un vide sanitaire et réalisé avec des tôles d'acier galvanisé de 2 mm d'épaisseur, celui-ci est du type ouvert comme représenté sur les figures 1 et 3. Il a une largeur intérieure de 2 m et une longueur intérieure de 3 m sur une hauteur de 0,8 m. Par conséquent la surface libre ou ouverte de ce réservoir est de 6 m² ce qui représente 8% de la surface totale du vide sanitaire, ce qui représente 4% de la surface de chaque étage.

De préférence la surface libre du premier réservoir est au moins 5% de la surface au sol du bâtiment

Concernant les échangeurs thermiques, deux échangeurs thermiques sont utilisés un pour chaque étage il s'agit d'échangeur thermique à contre courant.

## Revendications

1. Système de refroidissement pour bâtiment mettant en oeuvre la circulation d'un liquide de refroidissement dans un circuit hydraulique, comportant au moins un premier réservoir (2), au moins un deuxième réservoir (4), destiné à être situé à l'extérieur du bâtiment au moins un échangeur thermique (6) connectés en série par un circuit hydraulique, au moins une pompe hydraulique (8) disposée entre le premier réservoir (2) et l'échangeur thermique (6), , **caractérisé en ce que** le deuxième réservoir (4) comporte au moins une partie d'une de ses parois (4.1) en matériau poreux, **en ce que** le système comporte des moyens de contrôle (10) de la circulation du liquide du deuxième réservoir (4) vers le premier réservoir (2), et **en ce que**, lors du fonctionnement du système pour refroidir l'intérieur du bâtiment, l'écoulement du deuxième réservoir (4) vers le premier réservoir (2) est interrompu et la pompe hydraulique (8) fait circuler le liquide du premier réservoir (2) vers le deuxième réservoir à travers l'échangeur thermique (6), de sorte que le deuxième réservoir se remplisse.

2. Système de refroidissement selon la revendication 1, dans lequel le matériau poreux présente une porosité comprise entre 10% et 35%.

3. Système de refroidissement selon la revendication 1 ou 2, dans lequel le matériau poreux est une terre cuite ou céramique poreuse.

4. Système de refroidissement selon l'une des revendications 1 à 3, dans lequel le deuxième réservoir (4) comporte au moins une face extérieure structurée de sorte à présenter une grande surface d'échange thermique, la face extérieure structurée étant avantageusement une face de la partie poreuse.

5. Système de refroidissement selon l'une des revendications 1 à 4, dans lequel le deuxième réservoir (4) est destiné à être fixé sur une façade extérieure du bâtiment.

6. Système de refroidissement selon l'une des revendications 1 à 5, dans lequel le deuxième réservoir comporte une deuxième paroi (4.2) parallèle à la première paroi (4.1), ladite deuxième paroi (4.1) étant étanche au liquide, par exemple en acier galvanisé ou plastique.

7. Système de refroidissement selon l'une des revendications 1 à 6, comportant des moyens de court-circuit hydraulique du deuxième réservoir (4) de sorte à assurer l'évacuation du liquide provenant de l'échangeur thermique (6) vers le premier réservoir (2) lorsque le deuxième réservoir (4) est rempli entièrement.

8. Système de refroidissement selon l'une des revendications 1 à 7, dans lequel le premier réservoir (2) est destiné à être enterré, par exemple disposé dans un vide sanitaire.

9. Système de refroidissement selon l'une des revendications 1 à 8, dans lequel le premier réservoir (2) comporte une face supérieure (2.1) au moins partiellement ouverte pour assurer un échange thermique par évaporation entre le liquide qu'il contient et l'environnement extérieur.

10. Système de refroidissement selon l'une des revendications 1 à 9, comportant au moins deux deuxièmes réservoirs (4), les deux deuxièmes réservoirs (4) étant interconnectés.

11. Bâtiment comportant un ou plusieurs niveaux et un système de refroidissement selon l'une des revendications 1 à 10, le deuxième réservoir (4) étant fixé sur une façade extérieure, ladite façade extérieure étant avantageusement une façade non exposée aux rayons solaires.

12. Bâtiment selon la revendication 11, dans lequel le premier réservoir (2) comporte une face supérieure (2.1) ouverte dont la surface est supérieure à 5% de la surface au sol du bâtiment.

13. Bâtiment selon l'une des revendications 11 ou 12, comportant un échangeur de chaleur (6) à chaque niveau.

14. Bâtiment selon l'une des revendications 11 à 13, dans lequel le deuxième réservoir (4) est situé à une altitude supérieure à celle du premier réservoir (2) de sorte que l'écoulement du deuxième réservoir (4) vers le premier réservoir (2) s'effectue par gravité.

15. Procédé de refroidissement d'un bâtiment mettant en oeuvre la circulation d'un liquide de refroidissement dans un circuit hydraulique, comportant au moins un premier réservoir (2), au moins un deuxième réservoir (4) et au moins un échangeur thermique (6) connectés en série par un circuit hydraulique, au moins une pompe hydraulique (8) disposée entre le premier réservoir (2) et l'échangeur thermique (6), dans lequel le deuxième réservoir (4) est destiné à être situé à l'extérieur du bâtiment, dans lequel le système comporte des moyens de contrôle (10) de la circulation du liquide du deuxième réservoir (4) vers le premier réservoir (2), ledit procédé comportant les étapes :
a) interruption de l'écoulement du liquide de refroidissement du deuxième réservoir (4) vers le premier réservoir,
b) mise en route de la pompe hydraulique (8) assurant la circulation du liquide de refroidissement à travers l'échangeur thermique du premier réservoir (2) dans le deuxième réservoir (4) tant que l'intérieur du bâtiment doit être refroidi,
c) arrêt de la pompe hydraulique,
d) autorisation de l'écoulement du liquide de refroidissement du deuxième réservoir (4) vers le premier réservoir, ladite étape d) ayant avantageusement lieu lorsque la température du liquide de refroidissement est inférieure ou égale à un seuil donné et au plus tard en fin de nuit.

## Patentansprüche

1. Kühlsystem zum Kühlen von Gebäuden, bei dem die Zirkulation einer Kühlflüssigkeit in einem Hydraulikkreislauf erfolgt, enthaltend zumindest einen ersten Vorratsbehälter (2), zumindest einen zweiten Vorratsbehälter (4), der dazu bestimmt ist, außerhalb des Gebäudes angeordnet zu werden, zumindest einen Wärmetauscher (6), die über einen Hydraulikkreislauf in Reihe verbunden sind, zumindest eine Hydraulikpumpe (8), die zwischen dem ersten Vorratsbehälter (2) und dem Wärmetauscher (6) angeordnet ist, **dadurch gekennzeichnet, dass** bei dem zweiten Vorratsbehälter (4) zumindest ein Abschnitt einer seiner Wände (4.1) aus porösem Material besteht, dass das System Steuermittel (10) zum Steuern der Zirkulation der Flüssigkeit vom zweiten Vorratsbehälter (4) zum ersten Vorratsbehälter (2) enthält, und dass während des Betriebs des Systems zum Kühlen des Innenraums des Gebäudes die Strömung von dem zweiten Vorratsbehälter (4) zu dem ersten Vorratsbehälter (2) unterbrochen wird und die Hydraulikpumpe (8) die Flüssigkeit von dem ersten Vorratsbehälter (2) zu dem zweiten Vorratsbehälter durch den Wärmetauscher (6) fließen lässt, so dass sich der zweite Vorratsbehälter füllt.

2. Kühlsystem nach Anspruch 1, wobei das poröse Material eine Porosität zwischen 10 % und 35 % aufweist.

3. Kühlsystem nach Anspruch 1 oder 2, wobei das poröse Material gebrannte Erde oder poröse Keramik ist.

4. Kühlsystem nach einem der Ansprüche 1 bis 3, wobei der zweite Vorratsbehälter (4) zumindest eine strukturierte Außenfläche enthält, so dass er eine große Wärmeaustauschfläche aufweist, wobei die strukturierte Außenseite vorteilhaft eine Seite des porösen Abschnitts ist.

5. Kühlsystem nach einem der Ansprüche 1 bis 4, wobei der zweite Vorratsbehälter (4) dazu bestimmt ist, an eine Außenfassade des Gebäudes befestigt zu werden.

6. Kühlsystem nach einem der Ansprüche 1 bis 5, wobei der zweite Vorratsbehälter eine zweite Wand (4.2) enthält, die parallel zur ersten Wand (4.1) verläuft, wobei die zweite Wand (4.1) flüssigkeitsdicht ist und beispielsweise aus galvanisiertem Stahl oder Kunststoff besteht.

7. Kühlsystem nach einem der Ansprüche 1 bis 6, enthaltend Einrichtungen zum hydraulischen Kurzschluss des zweiten Vorratsbehälters (4), so dass das Abführen der von dem Wärmetauscher (6) stammenden Flüssigkeit zum ersten Vorratsbehälter (2) sichergestellt wird, wenn der zweite Vorratsbehälter (4) vollständig gefüllt ist.

8. Kühlsystem nach einem der Ansprüche 1 bis 7, wobei der erste Vorratsbehälter (2) dazu bestimmt ist, eingegraben, beispielsweise in einem Kellerraum angeordnet zu werden.

9. Kühlsystem nach einem der Ansprüche 1 bis 8, wobei der erste Vorratsbehälter (2) einer Oberseite (2.1) enthält, die zumindest teilweise offen ist, um einen Wärmeaustausch durch Verdampfung zwischen der darin enthaltenen Flüssigkeit und der Außenumgebung sicherzustellen.

10. Kühlsystem nach einem der Ansprüche 1 bis 9, enthaltend zumindest zwei zweite Vorratsbehälter (4), wobei die beiden zweiten Vorratsbehälter (4) miteinander verbunden sind.

11. Gebäude mit einem oder mehreren Stockwerken und einem Kühlsystem nach einem der Ansprüche 1 bis 10, wobei der zweite Vorratsbehälter (4) an eine Außenfassade befestigt ist, wobei die Außenfassade vorteilhaft eine Fassade ist, die nicht der Sonneneinstrahlung ausgesetzt ist.

12. Gebäude nach Anspruch 11, wobei der erste Vorratsbehälter (2) eine offene Oberseite (2.1) enthält, deren Fläche größer ist als 5 % der Bodenfläche des Gebäudes.

13. Gebäude nach einem der Ansprüche 11 oder 12, enthaltend in jedem Stockwerk einen Wärmetauscher (6).

14. Gebäude nach einem der Ansprüche 11 bis 13, wobei der zweite Vorratsbehälter (4) in einer Höhe liegt, die höher als die des ersten Vorratsbehälters (2) ist, so dass die Strömung (4) vom zweiten Vorratsbehälter (4) zum ersten Vorratsbehälter (2) mittels Schwerkraft erfolgt.

15. Verfahren zum Kühlen eines Gebäudes, bei dem die Zirkulation einer Kühlflüssigkeit in einem Hydraulikkreislauf erfolgt, enthaltend zumindest einen ersten Vorratsbehälter (2), zumindest einen zweiten Vorratsbehälter (4) und zumindest einen Wärmetauscher (6), die über einen Hydraulikkreislauf in Reihe verbunden sind, zumindest eine Hydraulikpumpe (8), die zwischen dem ersten Vorratsbehälter (2) und dem Wärmetauscher (6) angeordnet ist, wobei der zweite Vorratsbehälter (4) dazu bestimmt ist, außerhalb des Gebäudes zu liegen, wobei das System Steuermittel (10) zum Steuern der Zirkulation der Flüssigkeit vom zweiten Vorratsbehälter (4) zum ersten Vorratsbehälter (2) enthält, wobei das Verfahren folgende Schritte umfasst:
a) Unterbrechen der Strömung der Kühlflüssigkeit vom zweiten Vorratsbehälter (4) zum ersten Vorratsbehälter,
b) Ingangsetzen der Hydraulikpumpe (8), welche die Zirkulation der Kühlflüssigkeit durch den Wärmetauscher von dem ersten Vorratsbehälter (2) in den zweiten Vorratsbehälter (4) sicherstellt, solange der Innenraum des Gebäudes gekühlt werden soll,
c) Anhalten der Hydraulikpumpe,
d) Gestatten der Strömung der Kühlflüssigkeit vom zweiten Vorratsbehälter (4) zum ersten Vorratsbehälter, wobei der Schritt d) vorteilhaft dann erfolgt, wenn die Temperatur der Kühlflüssigkeit unter oder gleich einem vorgegebenen Schwellwert ist oder spätestens am Ende der Nacht.

## Claims

1. Building cooling system involving circulation of a cooling liquid in a hydraulic circuit comprising at least one first tank (2), at least one second tank (4) configured to be located outside the building, in which and at least one heat exchanger (6) connected in series through a hydraulic circuit, at least one hydraulic pump (8) placed between the first tank (2) and the heat exchanger (6), **characterized in that** the second tank (4) comprises at least part of one of its walls (4.1) are made of a porous material, **in that** the system comprises means (10) of controlling circulation of liquid from the second tank (4) to the first tank (2), and **in that**, when the system is in operation to cool the inside of the building, flow from the second tank (4) to the first tank (2) is interrupted and the hydraulic pump (8) circulates the liquid from the first tank (2) to the second tank through the heat exchanger (6), such that the second tank fills up.

2. Cooling system according to claim 1, in which the porosity of the porous material is between 10% and 35%.

3. Cooling system according to claim 1 or 2, in which the porous material is a baked clay or porous ceramic.

4. Cooling system according to one of claims 1 to 3, in which the second tank (4) comprises at least one textured outside face so as to have a large heat exchange area, the textured outside face being advantageously a face of the porous part.

5. Cooling system according to one of claims 1 to 4, in which the second tank (4) is designed to be fixed on an outside facade of the building.

6. Cooling system according to one of claims 1 to 5, in which the second tank comprises a second wall (4.2) parallel to the first wall (4.1), said second wall (4.1) being impervious to liquid, for example made of galvanised steel or plastic.

7. Cooling system according to one of claims 1 to 6, comprising means of making a hydraulic bypass of the second tank (4) so that the liquid from the heat exchanger (6) drains to the first tank (2) when the second tank (4) is completely filled.

8. Cooling system according to one of claims 1 to 7, in which the first tank (2) is designed to be buried, for example located inside a crawl space.

9. Cooling system according to one of claims 1 to 8, in which the first tank (2) comprises an upper face (2.1) which is at least partially open to enable heat exchange by evaporation between the liquid that it contains and the outside environment.

10. Cooling system according to one of claims 1 to 9, comprising at least two second tanks (4), the two second tanks (4) being connected to each other.

11. Building comprising one or several levels and a cooling system according to one of claims 1 to 10, the second tank (4) being fixed on an external façade, said external facade being advantageously a facade not exposed to solar radiation.

12. Building according to claim 11, in which the first tank (2) comprises an open upper face (2.1) with an area that is more than 5% of the floor area of the building.

13. Building according to claim 11 or 12, comprising one heat exchanger (6) at each level.

14. Building according to one of claims 11 to 13, in which the elevation of the second tank (4) is higher than the elevation of the first tank (2) such that flow takes place from the second tank (4) to the first tank (2) by gravity.

15. Method of cooling a building by circulating a cooling liquid in a hydraulic circuit, comprising at least one first tank (2), at least one second tank (4) and at least one heat exchanger (6) connected in series through a hydraulic circuit, at least one hydraulic pump (8) placed between the first tank (2) and the heat exchanger (6), in which the second tank (4) will be located outside the building, in which the system comprises means (10) of controlling circulation of the liquid from the second tank (4) to the first tank (2), said method comprising the following steps:
a) interruption of the flow of cooling liquid from the second tank (4) to the first tank,
b) start the hydraulic pump (8) to circulate the cooling liquid through the heat exchanger from the first tank (2) into the second tank (4) as long as the inside of the building needs to be cooled,
c) stop the hydraulic pump,
d) allow the cooling liquid to flow from the second tank (4) to the first tank, step d) advantageously taking place when the temperature of the cooling liquid is less than or equal to a given threshold, and not later than at the end of the night.
